# EUROPÄISCHE PATENTSCHRIFT

(11) **EP 1 054 316 B1**
(45) Veröffentlichungstag und Bekanntmachung des Hinweises auf die Patenterteilung: **11.10.2006**
(21) Anmeldenummer: 99109663.7
(22) Anmeldetag: 15.05.1999
(51) Int. Cl.: G06F 1/00, H05K 5/02

(54) **Vorrichtung zur Sicherung elektronischer Schaltungen gegen unberechtigten Zugang**
Security device for electronic circuits against unauthorised access
Système de sécurité pour circuits électroniques contre les accès non autorisés

(43) Veröffentlichungstag der Anmeldung: 22.11.2000
(73) Patentinhaber: Scheidt & Bachmann GmbH, D-41238 Mönchengladbach (DE)
(72) Erfinder: Miller, Norbert, Dr.,, 41063 Mönchengladbach (DE); Wortelkamp, Ulrich, Dipl.Ing.,, 41238 Mönchengladbach (DE)
(74) Vertreter: Stenger, Watzke & Ring

(56) Entgegenhaltungen:
- EP-A- 0 495 645
- US-A- 4 811 288

## Beschreibung

Die Erfindung betrifft eine Vorrichtung zur Sicherung elektronischer Schaltungen gegen unberechtigten Zugang.

Bei einer Vielzahl elektronischer Schaltungen, d. h. auf Platinen angeordneten Schaltungen aus elektrischen und/oder elektronischen Bauelementen und Leiterbahnen, ist es wünschenswert bzw. erforderlich, zumindest Teilbereiche gegen einen unberechtigten Zugriff abzusichern. Insbesondere ist dies im Bereich von Einrichtungen für Warenverkaufs- und/oder Dienstleistungen wie beispielsweise Tankautomaten, Geldausgabeautomaten, Automaten zur Überprüfung einer Zugangsberechtigung, Kasseneinrichtungen zur Abwicklung eines bargeldlosen Zahlungsverkehrs und dergleichen der Fall. Anwendungsfälle sind auch PIN-Eingabe-Verschlüsselungen, ec-cash-Verfahren, virtuelle Händlerkarte für ec-Geldkarte u.s.w.. In all diesen Fällen enthalten die Schaltungen oder Schaltungsplatinen Bausteine, die mit geheimzuhaltenden Daten versehen sind. So gibt es beispielsweise im Bereich des bargeldlosen Zahlungsverkehrs Kenncode-Karten, die auf platinenseitige Lesestellen aufgesetzt werden und im Falle der Verwendung einer Chipkarte zur Kontrolle ausgelesen werden. Manche Platinen stellen eine Vielzahl von Kenncode-Karten bereit, um die Einrichtung für eine Vielzahl von Karten unterschiedlicher Institutionen nutzbar zu machen. Es ist durchaus bekannt, anstelle der Kenncode-Karten über Tastaturen oder gar über Datenfernübertragung wiederbeschreibbare Speicherbausteine auf den Platinen mit Codes zu versehen.

In allen genannten Fällen muß vermieden werden, daß unberechtigte Dritte in den Besitz der geheimzuhaltenden Daten gelangen oder diese manipulieren können. In beiden Fällen wäre es den Dritten möglich, finanzielle Transaktionen zu beeinflussen oder zu simulieren.

Es ist bekannt, Platinen durch Verwendung von Abdeckungen zu glühen. Dabei werden die mit Bausteinen bestückten Bereich abgedeckt und die platinenseitigen Kontaktierungsbereiche liegen frei. Beispielsweise handelt es sich um Kontakte zum Anschluß an ein Datenbussystem.

Die abgedeckten Bereiche werden üblicherweise mit metallischen Materialien abgedeckt. Zum einen soll ein reines Manipulieren mittels Hebelwerkzeugen verhindert werden, d. h., die zur Abdeckung verwendeten Platten sollen gegen biegen und dergleichen einen gewissen Widerstand aufweisen. Auch soll jedoch ein Anbohren verhindert werden oder durch geeignete Maßnahmen nutzlos gemacht werden. So ist es bekannt, zu sichernde Bereiche mit einer Anordnung von Leiterbahnen zu überdecken. Im Falle eines Anbohrens werden Leiterbahnen zerstört oder miteinander in Verbindung gebracht, so daß über Detektionsschaltkreise die entsprechenden Speicherbausteine, Kenncode-Karten und dergleichen automatisch gelöscht werden. Ein weiterer Zugriff ist somit für die jeweilige Person nutzlos.

In der Vergangenheit wurden vorzugsweise Metallplatten verwendet, da diese den Vorteil haben, in der entsprechenden Position verschraubbar zu sein, da beispielsweise bei Verwendung von Kenncode-Karten der Bereich grundsätzlich wieder zugänglich gemacht werden muß. Bei neuartigen Speichereinheiten und sicherheitsrelevanten Platinen ist dies nicht mehr erforderlich, da die Speicherbausteine beispielsweise per Datenfernübertragung, Terminalemulation oder sonstwie softwareseitig zugänglich sind.

Ein Nachteil herkömmlicher Absicherungen besteht zum einen in dem recht hohen kostenmäßigen Aufwand aufgrund der Verwendung aufwendiger Materialien, zum anderen in der grundsätzlichen Problematik der Trennstelle zwischen Platine und Abdeckung, die regelmäßig ein Aufhebeln zumindest im geringsten Maße zuläßt, in dem Materialgewicht, der beschränkten Möglichkeit der optischen Gestaltung und insbesondere auch in dem Aufwand zur Verlegung einer Leiterbahnüberdeckung als Bohrsicherung. Eine solche Leiterbahnüberdeckung erzeugt entweder hohe Kosten, um eine erhebliche Dichtigkeit bereitzustellen oder sie hinterläßt nichtgesicherte Freiflächen, die durch meßtechnische Verfahren mittelbar sind. So können Widerstandsmessungen, Röntgenverfahren, Infrarotverfahren und dergleichen verwendet werden, um den Leiterbahnverlauf festzustellen und die anbohrbaren Freiflächen zu ermitteln. Um dagegen einen Schutz bereitzustellen, muß wiederum das äußere Abdeckungsmaterial besonders ausgestaltet werden, was wiederum die Kosten und die Bearbeitungsmöglichkeiten erheblich hochtreibt.

US 4811288 offenbart eine Sicherheitsvorrichtung zum Schutze von in einem rücksetzbaren Speicher gespeicherten, sensiblen Daten. Diese Sicherheitsvorrichtung weist ein aus sechs Platten aus einem Keramikwerkstoff gefertigtes Gehäuse auf, welches die zu schützenden, mit den sensiblen Daten versehenden elektronischen Schaltkreise umgibt. Auf jeder der Keramikplatten sind in Dünnfilmtechnologie in einer merandrierenden Anordnung Leiterbahnen angeordnet. Die Leiterbahnen sind zu zwei unabhängigen Schaltungsnetzen vernetzt. Die Leiterbahnen sind dabei gemäß der in dieser Druckschrift offenbarten technischen Entwicklung zugrunde liegenden Idee sehr schmal ausgebildet und verlaufen mit geringen Zwischenabständen. So werden gemäß Spalte 6 Zeilen 40 bis 45 dieser Druckschrift Leiterbahnenweiten von 25 µm sowie Abstände der Leiterbahnen gleichen Ausmaßes bevorzugt.

Ein solch engmaschiges Netz aus Schutzleiterbahnen wird gemäß dieser Druckschrift vorgesehen, um auch das Ausbilden von Löchern sehr kleinen Durchmessers in den Platten ohne eine Beschädigung der Schutzleiterbahnen ausschließen zu können (vergl. Spalte 8 Zeilen 47 bis 55).

Keramik wird als Material des Gehäuses gewählt, da dieses Material gegenüber chemischen Angriffen hochresistent ist (vergl. Spalte 3 Zeilen 9 bis 12).

EP 0495645 A1 beschreibt eine ähnlich aufgebaute Schutzvorrichtung zum Schützen gespeicherter, sensibler Daten. Auch diese Vorrichtung ist aus einem aus sechs, vorzugsweise aus einem Keramikmaterial bestehenden, Platten gebildeten, die zu schützenden elektronischen Bauelemente einschließenden Gehäuse gebildet.

Auch bei dieser Vorrichtung sind die Keramikplatten von merandrierenden Leiterbahnen als Schutzleiter überzogen, wobei deren Abstände und Breiten mit etwa 200 µm angegeben sind (vergl. Spalte 5 Zeilen 26 bis 30).

Die das Gehäuse bildenden Platten sind auch gemäß dieser Druckschrift wegen dessen chemischer Widerstandsfähigkeit aus einem keramischen Material gefertigt (vergl. Spalte 2 Zeilen 50 bis 52).

Ausgehend von diesem Stand der Technik liegt der vorliegenden Erfindung die **Aufgabe** zugrunde, eine Vorrichtung zur Sicherung elektronischer Schaltungen gegen mechanische Beschädigung, elektrische bzw. elektronische Manipulation, also gegen unberechtigten Zugang der gattungsgemäßen Art dahingehend zu verbessern, daß diese mit geringem wirtschaftlichen Aufwand herstellbar und handhabbar ist und darüber hinaus eine erhöhte Sicherheit gewährleistet.

Zur technischen **Lösung** dieser Aufgabe wird mit der Erfindung vorgeschlagen eine Vorrichtung zur Sicherung elektronischer Schaltungen gegen unberechtigten Zugang mit wenigstens einem haubenartigen Abdeckelement, welches an einer Schaltungsplatine diese wenigstens bereichsweise überdeckend anzuordnen ist und zur Erfassung mechanischer Beschädigung mit einem Detektionsschaltkreis verbindbarer Leiterbahnen aufweist, wobei das Abdeckelement aus einem Material mit großer Härte bei gleichzeitig großer Sprödigkeit gebildet ist. Eine solche Vorrichtung ist im Hauptanspruch 1 definiert.

Mit der Erfindung wird vorgeschlagen, ein neuartig aufgebautes Abdeckelement auszubilden, welches bei großer Härte und gleichzeitig großer Sprödigkeit gewährleistet, bei mechanischer Beschädigung in eine Vielzahl von Bruchstücken zu zerspringen. Dadurch wird auch bei nur geringfügiger Anordnung von Leiterbahnen sichergestellt, daß auf das Abdeckelement selbst ausgeübte mechanische Manipulationen detektiert werden.

Gemäß einem besonders vorteilhaften Vorschlag der Erfindung wird das harte und zugleich spröde Material zur Erhöhung seiner Druckeigenspannung vorgespannt.

Dadurch wird bewirkt, daß das Material in eine große Zahl im wesentlichen gleichförmiger kleine Einzelstücke zerspringt, wenn auf irgendeine Stelle auch nur punktueller Druck ausgeübt wird.

Gemäß einem vorteilhaften Vorschlag der Erfindung handelt es sich bei dem Material um Glas, vorzugsweise getempertes Glas. Alternativ kommen aber auch geeignete Kunststoffe, keramische Werkstoffe und dergleichen in Frage. Die wesentliche Eigenschaft ist die Kombination von Härte und Sprödigkeit, die ein völlig unkontrolliertes und großflächig vernetzendes Zerspringen in Folge von Druckausübung gewährleistet. Selbst ein Anbohren eines solchen Materials ist praktisch nicht möglich.

Die Leiterbahnen können auf einer Oberfläche des Abdeckelementes ausgebildet oder zumindest teilweise in dieses eingebettet sein. Im Falle der Verwendung eines haubenartigen Abdeckelementes, welches wie ein Kappe auf eine Platine oder deren Teilbereiche aufgesetzt wird, sind die Leiterbahnen der der Platine zugewandten Seite ausgebildet. Die Leiterbahnen werden vorzugsweise durch reinen Druck mit entsprechenden auf der Platine angeordneten Kontakten kontaktiert. Schon bei einem geringfügigen Abhebeln des Abdeckelementes von der Platine oder umgekehrt wird eine Trennung von Leiterbahn und Kontakt bewirkt, so daß die Manipulation detektierbar ist. Es wird mit Vorteil vorgeschlagen, eine Vielzahl von Kontaktierungsstellen für Leiterbahnen vorzusehen, beispielsweise bei Abdeckelementen mit im wesentlichen eckigen Grundflächen im Bereich aller Ecken. Bei den Kontaktstellen kann es sich um Mikroschalter handeln, Reedkontakte, elektrisch leitfähiges Gummi und dergleichen.

Gemäß einem besonders vorteilhaften Vorschlag der Erfindung ist platinenseitig ein von der Platine abstehender Rahmen ausgebildet, vorzugsweise aus dem Platinenmaterial, welcher einen Aufsetzrahmen für ein Abdeckelement darstellt. Der Rahmen selbst kann mit Leiterbahnen oder leitendem Material durchwirkt sein, um ein Hebeln, Anbohren und dergleichen erfassen zu können.

Das Abdeckelement wird vorzugsweise mittels eines Kunststoffrahmens an der Platine befestigt. In vorteilhafter Weise können auf beiden Oberflächen einer Platine entsprechende Abdeckelemente angeordnet sein. Der Rahmen kann dann die Abdeckelemente umgreifen, so daß nur noch die Anschlußkontakte für die Platine freistehen. Alternativ kann nur auf einer Oberfläche ein Abdeckelement gemäß der Erfindung aufgesetzt sein. Auf der anderen Seite kann dann beispielsweise eine Platte aus gehärtetem Metall angeordnet sein. Derartige Metallplatten verhindern ein Röntgen zur Erfassung der darunterliegenden Leiterbahnanordnung, die als Bohrschutz dienen, darüber hinaus kann das Metall ein Anbohren jedenfalls unter Normalbedingungen verhindern.

Mit der Erfindung ist es möglich, völlig neuartige Platinen mit sicherheitsempfindlichen Bausteinen bereitzustellen, bei welchen die entsprechenden Platinenbereiche mit einem Abdeckelement abgedeckt sind, ohne daß noch die Möglichkeit des Abhebelns, Durchbohrens, Durchbrechens und dergleichen besteht. Das Abdeckelement zerspringt in eine Vielzahl von Einzelteilen, so daß angeordnete Leiterbahnen in jedem Fall zerstört werden. Vorzugsweise können die Bahnen durch Lackaufbringung erzeugt sein, reißen also direkt mit. Aber auch eingebettete dünne Bahnen werden auf der Stelle beschädigt. Die Kontaktierung der Leiterbahnen gegenüber der Platinen kann auf vielfältige Weise erfolgen, beispielsweise unter Verwendung piezoelektrischer, optoelektronischer oder sonstiger Elemente oder eben einfach nur durch reine Flächenkontakte. Auch mechanisch arbeitende Elemente zur Feststellung der Veränderung eines Abstands zwischen Abdeckelement und Platine können verwendet werden. Im Falle des Abhebens oder Beschädigens der Platine oder der Leiterbahnen werden Maßnahmen eingeleitet, die ein sofortiges Löschen der sicherheitsrelevanten Daten bewirken. So können Stromausfälle erfolgen oder ein direkter Start einer löschenden Software. Auch können die sicherheitsempfindlichen Daten durch relevante Daten überschrieben werden.

Die Erfindung läßt sich auf einfache und wirtschaftliche Weise umfangreich einsetzen und erhöht die Sicherheit elektronischer Schaltungen erheblich.

Weitere Vorteile und Merkmale der Erfindung ergeben sich aus der folgenden Beschreibung anhand der Figuren. Dabei zeigen:
- Fig. 1: eine schematische perspektivische Darstellung eines Ausführungsbeispiels der Erfindung;
- Fig. 2: eine Schnittansicht entlang der Linie II-II gemäß Fig. 1 und
- Fig. 3: eine Detailansicht des Details III gemäß Fig. 1.

In den Figuren sind gleiche Elemente mit gleichen Bezugszeichen versehen.

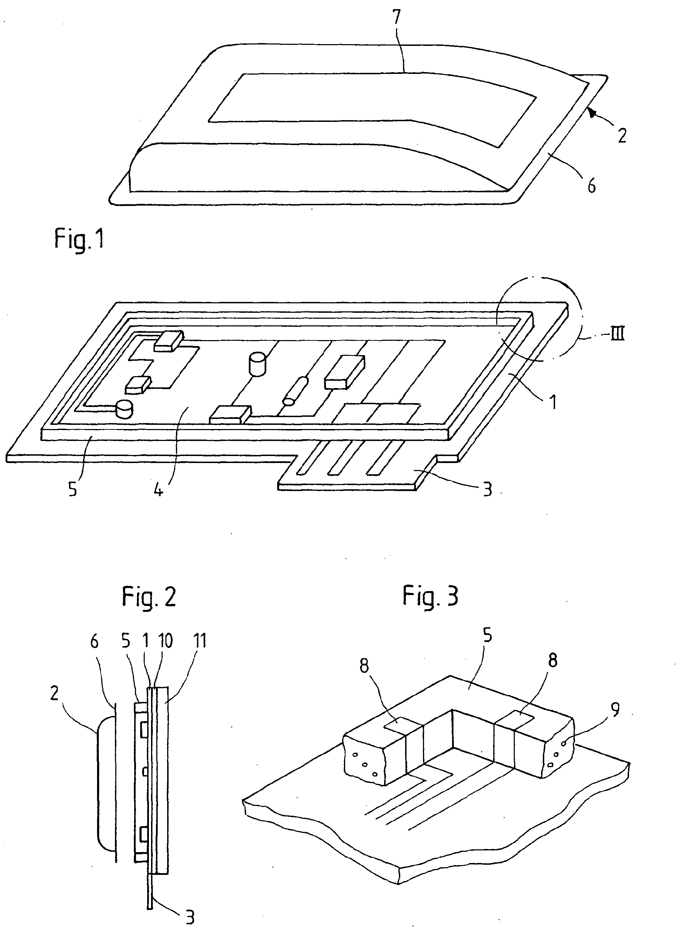

Die in den Figuren beispielhaft gezeigte Platine 1, die an sich bekannter Weise eine Schaltung 4 aufweist und eine Anschlußleiste 3, die beispielsweise im Anschluß an einen Datenbussystem geeignet ist. Im gezeigten Ausführungsbeispiel hat die Platine 1 einen Rahmen 5, der auf ihrer sogenannten Bestückungsseite um den zu sichernden Schaltungsbereich umläuft. Der Rahmen 5 ist aus dem Kunststoffmaterial gebildet, aus dem auch die Platine 1 gebildet ist. Fig. 3 zeigt, daß der Rahmen 5 von Leitern 9 durchwirkt ist, so daß diese bei einem Anbohren des Rahmens oder bei einer Beschädigung aufgrund von Hebelversuchen beschädigt und/oder kurzgeschlossen werden.

Auf den Rahmen 5 wird der Rand 6 einer Abdeckung 2 aufgesetzt. Die Abdeckung 2 besteht aus einem harten und zugleich spröden Material und ist mit Leiterbahnen 7 durchzogen, die entweder an der der Platine zugewandten Seite aufgebracht oder in das Material der Abdeckung 2 eingebettet sind. Auch Kombinationen sind möglich. Der Rand 6 der Abdeckung 2 wird auf den Rahmen 5 der Platine 1 aufgesetzt. Die Platine 1 und die Abdeckung 2 bilden zusammen einen hermetisch abgesicherten Raum, in dem die sicherheitsrelevante Bauteile angeordnet sind.

Die Befestigung der Abdeckung 2 relativ zur Platine 1 erfolgt mit nichtgezeigten, üblichen Mitteln wie Rahmenelementen, Klemmen, Klebern und/oder dergleichen.

Ein Detail zeigt Fig. 3, in welcher auf dem Rahmen 5 angeordnete Kontakte 8 abgebildet sind. Auf diese Kontakte 8 werden Leiterbahnenden der Leiter 7 der Abdeckung 2 aufgesetzt und durch Montage fixiert. Bereits bei einem Aufhebeln läßt sich dieses somit detektieren.

Gemäß Fig. 2 ist die Rückseite der Platine 1 mit einer Metallplatte 11 abgedeckt, so daß auch die reine Schaltungsseite, auch Lötseite genannt, der Platine 1 gesichert ist. Anstelle der Metallplatte 1, die im gezeigten Ausführungsbeispiel durch eine Isolationsschicht 10 von der Platine 1 getrennt ist, kann auch eine Abdeckung 2 angeordnet werden.

Wesentliches Element der erfindungsgemäßen Ausführungsform ist die Abdeckung 2, die aus hartem und zugleich sprödem, vorzugsweise vorgespanntem, also getempertem Material besteht. Schon kleinste Beschädigungen führen dazu, daß die Abdeckung 2 in eine große Vielzahl von kleinen Elementen zerspringt, somit also mit hoher Sicherheit Leiter durchtrennt und entsprechende Folgemaßnahmen eingeleitet werden. Die Folgemaßnahmen sind ein Löschen der beschreibbaren Speicher, so daß die Informationen weder ausgelesen noch manipuliert werden können.

Das beschriebene Ausführungsbeispiel dient nur der Erläuterung es ist nicht beschränkend.

## Patentansprüche

1. Vorrichtung zur Sicherung elektronischer Schaltungen (4) gegen unberechtigten Zugang mit wenigstens einem haubenartigen Abdeckelement (2), welches an einer Schaltungsplatine (1) diese wenigstens bereichsweise überdeckend anzuordnen ist und zur Erfassung mechanischer Beschädigung mit einem Detektionsschaltkreis verbindbarer Leiterbahnen (7) aufweist, **dadurch gekennzeichnet, dass** das Abdeckelement aus einem Material mit solcher Härte bei gleichzeitig solcher Sprödigkeit gebildet ist, so dass das Abdeckelement (2) bei mechanischer Beschädigung in eine Vielzahl von Bruchstücken zerspringt.

2. Vorrichtung nach Anspruch 1, **dadurch gekennzeichnet, daß** das Abdeckelement (2) aus einem Material gebildet ist, welches zur Erlangung einer hohen Druckeigenspannung vorgespannt ist.

3. Vorrichtung nach einem der vorhergehenden Ansprüche, **dadurch gekennzeichnet, daß** das Abdeckelement (2) aus Glas gebildet ist.

4. Vorrichtung nach einem der vorhergehenden Ansprüche, **dadurch gekennzeichnet, daß** Leiterbahnen (7) auf wenigstens einer Oberfläche des Abdeckelementes (2) aufgebracht sind.

5. Vorrichtung nach einem der vorhergehenden Ansprüche, **dadurch gekennzeichnet, daß** die am Abdeckelement (2) angeordneten Leiterbahnen (7) mit auf der Platine (1) angeordneten und vom Abdeckelement (2) abgedeckten Kontakten (8) kontaktierbar sind.

6. Vorrichtung nach einem der vorhergehenden Ansprüche, **dadurch gekennzeichnet, daß** platinenseitig ein Aufsetzrahmen (5) für das Abdeckelement (2) ausgebildet ist.

7. Vorrichtung nach Anspruch 6, **dadurch gekennzeichnet, daß** der Aufsetzrahmen (5) zur Erfassung mechanischer Beschädigung vorgesehene Leiterbahnen (9) aufweist.

8. Vorrichtung nach einem der vorhergehenden Ansprüche, **dadurch gekennzeichnet, daß** das Abdeckelement (2) an der Platine (1) mittels eines Kunststoffrahmens befestigt wird.

9. Vorrichtung nach einem der vorhergehenden Ansprüche, **dadurch gekennzeichnet, daß** je ein Abdeckelement (2) auf jeder der beiden Platinenoberflächen angeordnet ist.

10. Vorrichtung nach einem der Ansprüche 1 bis 8, **dadurch gekennzeichnet, daß** ein Abdeckelement (2) nur auf einer Platinenoberfläche angeordnet ist, während auf der anderen Platinenoberfläche eine Platte (11) aus gehärtetem Metall befestigt ist.

## Claims

1. A device for securing electronic circuits (4) against unauthorised access with at least one cap-like cover element (2) which is to be arranged on a printed circuit board (1) so as to cover it, at least in certain regions, and has conductive tracks (7) connectable to a detection switching circuit for detecting mechanical damage, **characterised in that** the cover element is formed of a material with such a hardness and, at the same time, such brittleness that in the event of mechanical damage, the cover element (2) breaks into a plurality of fragments.

2. A device as claimed in claim 1, **characterised in that** the cover element (2) is formed of a material which pre-stressed in order to obtain a high internal compressive stress.

3. A device as claimed in one of the preceding claims, **characterised in that** the cover element (2) is formed of glass.

4. A device as claimed in one of the preceding claims, **characterised in that** the conductive tracks (7) are applied to at least one surface on the cover element (2).

5. A device as claimed in one of the preceding claims, **characterised in that** the conductive tracks (7) arranged on the cover element (2) are contactable with contacts (8) which are arranged on the circuit board (1) and are covered by the cover element (2).

6. A device as claimed in one of the preceding claims, **characterised in that** a positioning frame (5) for the cover element (2) is formed on the circuit board.

7. A device as claimed in claim 6, **characterised in that** the positioning frame (5) has conducted tracks (9) provided to detect mechanical damage.

8. A device as claimed in one of the preceding claims, **characterised in that** the cover element (2) is secured to the circuit board (1) by means of a plastic frame.

9. A device as claimed in one of the preceding claims, **characterised in that** a respective cover element (2) is arranged on each of the two circuit board surfaces.

10. A device as claimed in one of the claims 1 to 8, **characterised in that** a cover element (2) is arranged on only one circuit board surface whist a plate (11) of hardened metal is secured to the other circuit board surface.

## Revendications

1. Dispositif pour la protection de circuits électroniques (4) contre un accès non autorisé avec au moins un élément de couverture (2) en forme de capuchon, destiné à être disposé sur une plaquette de circuits (1) en recouvrant au moins partiellement celle-ci et qui présente pour détecter les dégradations mécaniques des pistes conductrices (7) pouvant être connectées à un circuit de détection, **caractérisé en ce que** l'élément de couverture est fait d'un matériau ayant une dureté telle et en même temps une friabilité telle que l'élément de couverture (2) éclate en multiples fragments en cas de dégradation mécanique.

2. Dispositif selon la revendication 1, **caractérisé en ce que** l'élément de couverture (2) est fait d'un matériau qui est précontraint afin d'obtenir une contrainte propre élevée sous pression.

3. Dispositif selon l'une des revendications précédentes, **caractérisé en ce que** l'élément de couverture (2) est fait de verre.

4. Dispositif selon l'une des revendications précédentes, **caractérisé en ce que** des pistes conductrices (7) sont formées sur au moins une surface de l'élément de couverture (2).

5. Dispositif selon l'une des revendications précédentes, **caractérisé en ce que** les pistes conductrices (7) disposées sur l'élément de couverture (2) peuvent être mises en contact avec des contacts (8) disposés sur la plaquette (1) et couverts par l'élément de couverture (2).

6. Dispositif selon l'une des revendications précédentes, **caractérisé en ce qu'**un cadre de pose (5) est formé sur la plaquette pour l'élément de couverture (2).

7. Dispositif selon la revendication 6, **caractérisé en ce que** le cadre de pose (5) possède des pistes conductrices (9) destinées à la détection de dégradations mécaniques.

8. Dispositif selon l'une des revendications précédentes, **caractérisé en ce que** l'élément de couverture (2) est fixé sur la plaquette (1) au moyen d'un cadre en plastique.

9. Dispositif selon l'une des revendications précédentes, **caractérisé en ce qu'**un élément de couverture (2) est disposé sur chacune des deux surfaces de la plaquette.

10. Dispositif selon l'une des revendications 1 à 8, **caractérisé en ce qu'**un seul élément de couverture (2) est disposé sur une surface de la plaquette, tandis qu'une plaque (11) de métal trempé est fixée sur l'autre surface de la plaquette.
